# FASCICULE DE BREVET EUROPEEN

(11) **EP 0 384 855 B1**
(45) Date de publication et mention de la délivrance du brevet: **09.06.1993**
(21) Numéro de dépôt: 90420067.2
(22) Date de dépôt: 08.02.1990
(51) Int. Cl.: B62B 3/10

(54) **Tablette pour liste d'achats adaptable à la serrure de consigne de la poignée des chariots, notamment de magasins à libre service**
Tafel für Einkaufszettel, befestigbar am Kopplungsteil eines Einkaufswagens
Support for shopping list, attachable to the locking device of a shopping cart

(30) Priorité: 21.02.1989 FR 8902466
(43) Date de publication de la demande: 29.08.1990
(73) Titulaire: Carrie, Marcel, F-69410 Champagne au Mt d'Or (FR)
(72) Inventeur: Carrie, Marcel, F-69410 Champagne au Mt d'Or (FR)
(74) Mandataire: Schmitt, John

(56) Documents cités:
- DE-U- 8 709 089
- FR-A- 1 380 595
- US-A- 3 881 267
- US-A- 4 683 609

## Description

L'invention concerne une tablette pour liste d'achats adaptable à la serrure de consigne de la poignée des chariots notamment de magasins à libre service, d'une façon amovible ou non, cette tablette étant destinée aux clients ayant préparé à l'avance une telle liste sur papier ; il s'agit donc d'un accessoire de voiture à bras servant au déplacement d'objets, et les chariots utilisés sont dits à péage.

Les clients de ces magasins ou supermarchés, doivent circuler parmi les rayons avec un chariot connu sous son nom de marque déposée Caddie, tout en consultant fréquemment leur liste d'achats. Or la consultation de cette liste n'est pas pratique car le client doit à la fois tenir cette liste à la main, souvent rayer les achats faits de l'autre main sans support rigide, ou bien écrire le prix des achats pour les totaliser au fur et à mesure afin de ne pas dépasser son budget du jour, pousser son chariot, s'approvisionner, emballer et peser les produits frais et remplir son chariot. Il s'en suit que le client perd parfois cette liste manuscrite qui est souvent froissée en cours de trajet à la suite de multiples manipulations et qu'il égare aussi parfois son crayon. Certains clients utilisent aussi une calculatrice électronique de poche qui peut être assimilée à une liste d'achats.

Bien entendu, une telle tablette peut aussi être utilisée à d'autres fins sur tout chariot de manutention muni d'une poignée de manoeuvre horizontale avec une serrure de consigne, dans les gares de chemins de fer et les aéroports par exemple.

On connaît déjà depuis de nombreuses années des tablettes à usage de support de papier ou de calculatrices qui ont fait l'objet de brevets dont les revendications portent notamment sur les dispositifs de fixation de la tablette sur le chariot, qui peuvent être classés en quatre catégories :

La première catégorie concerne les tablettes amovibles dont la stabilité est assurée par une fixation sur la poigné de manoeuvre du chariot avec calage sur ses brancards ; c'est le cas du brevet FR-A-1380595 ; la deuxième catégorie concerne les tablettes fixes dont la stabilité est assurée par vissage sur la poignée de manoeuvre du chariot : c'est le cas des brevets GB-A-2035225 - US-A-2888761 et US-A-3881267 ; la troisième catégorie concerne les tablettes amovibles fixées par pince sur la corbeille du chariot avec calage sur la poignée de manoeuvre : c'est le cas du brevet US-A-3539204. Enfin, la quatrième catégorie concerne les calculatrices légères amovibles fixées par pince sur la poignée de manoeuvre du chariot : c'est le cas du brevet EP-A-0297452 (DE-U-8709089) et de la variante du brevet précité GB-A-2035225.

Les tablettes de listes d'achats décrites dans ces brevets sont lourdes, puisqu'elles exigent un calage sur un élément du chariot ou une fixation définitive afin de compenser leur porte-à-faux ou bras de levier ; certaines sont encombrantes et seraient donc difficilement adaptables sur la poignée des chariots à péage munis d'une serrure de consigne, dont elles gêneraient le fonctionnement. Il faut remarquer que ces tablettes ne sont pas commercialisées du moins en France ce qui ne permet pas actuellement de de remédier aux inconvénients déjà signalés rencontrés par les clients des magasins à libre service. Quant aux calculatrices, elles sont légères, et sans porte-à-faux, d'où leur fixation simplifiée. Enfin les tablettes amovibles peuvent être volées. D'autre part, la conception de ces tablettes ne permet pas d'y installer les systèmes modernes de fixation ou d'écriture des listes d'achats énumérés dans ce qui suit.

La présente invention a pour but de remédier à ces inconvénients en perfectionnant et en modernisant les dispositifs de fixation et de stabilisation des tablettes sur les chariots. L'invention, telle qu'elle est caractérisée dans les revendications, utilise pour supporter les tablettes de liste d'achats le dessus plat, horizontal ou incliné en pupitre, des serrures de consigne qui sont automatiques, fixées sur la poignée de manoeuvre des chariots. En effet, depuis quelques années, les chariots d'achats des magasins à libre service sont progressivement équipés de telles serrures qui permettent d'accrocher entre eux ces chariots à péage, après leur emboîtement sur leur aire de stockage et de les décrocher à l'aide d'une pièce de monnaie ou d'un jeton de déconsignation en métal ou en matière plastique rigide appelé pièce de déconsignation dans ce qui suit.

Il est précisé qu'une serrure de consigne automatique est un dispositif de verrouillage constitué par une serrure à deux entrées, qui comporte toujours du côté de la corbeille du chariot une alvéole ouverte appelée alvéole de consignation dans ce qui suit dont l'entrée permet d'y introduire la fiche façonnée en forme de crochet d'une chaîne d'ancrage fixée à la serrure du chariot précédent et appelé crochet d'ancrage dans ce qui suit. Ce crochet d'ancrage, s'il est en acier plat, a souvent la forme d'un crochet de ceinture de sécurité de voiture automobile muni d'éléments d'ancrage, c'est-à-dire en forme d'ancre ou de languette perforée puisqu'il a le même usage et que le même principe d'amarrage est utilisé pour les chariots. Ce crochet d'ancrage peut prendre d'autres formes en fonction des caractéristiques de la serrure de consigne, par exemple la forme d'une tige allongée et crantée.

La deuxième entrée, appelée alvéole de déconsignation dans ce qui suit, est placée sur l'un des autres côtés de la serrure et elle permet au client d'y introduire sa pièce de déconsignation, parfois à l'aide d'un tiroir à fente d'insertion, qui décroche et repousse le crochet d'ancrage et permet de libérer le chariot. Le client récupère sa pièce de déconsignation en introduisant, dans l'alvéole de consignation de la serrure de son chariot, le crochet d'ancrage du chariot précédent qui décroche et repousse la pièce.

Le premier dispositif de fixation de la tablette sur une serrure de consigne consiste à munir cette tablette d'une fiche et d'enclencher cette fiche dans l'entrée correspondante de la serrure pour y fixer la tablette d'une façon amovible qui est alors calée contre et sur cette serrure. Le deuxième dispositif consiste à fixer directement et définitivement la tablette sur la serrure : ces dispositifs constituent donc un cinquième système de fixation des tablettes sur les chariots de supermarchés et ils apportent les avantages énumérés ci-après :

Le dispositif amovible permet aux magasins à libre service équipés de chariots à péage de fournir les tablettes à leurs clients qui deviennent responsables de leur conservation pendant leurs achats, et de leur utilisation. Les clients disposent ainsi d'une tablette munie d'un système antivol, d'une grande facilité de pose et de dépose, ne gênant en rien le décrochage et l'accrochage des chariots. Ces tablettes sont légères et d'un format suffisant pour y fixer les listes d'achats courantes et leur surface peut être munie de systèmes modernes de fixation de liste d'achats : papiers adhésifs à faible adhérence qui se collent, se décollent, et se recollent, surface de tablette en acier émaillé permettant une écriture directe au crayon effaçable à sec, et utilisation de plots magnétiques. Enfin, ce genre de tablette évite au client d'égarer sa pièce de déconsignation. Quant au dispositif fixe, il permet de fabriquer une tablette en même temps qu'une serrure de consigne. Les deux dispositifs permettent de supporter aussi une calculatrice ou un ordinateur de poche.

Le dispositif de tablette amovible faisant l'objet de l'invention est exposé ci-après plus en détail à l'aide de dessins à l'échelle de 1/2 représentant deux modes d'exécution et d'emploi préférentiels permis par l'utilisation de deux modèles de serrures de consigne automatiques particulièrement bien adaptés à la réalisation de l'invention ; toutes les tablettes sont munies dessus, d'une pinces d'agrafage du papier et d'un porte-crayon.

La figure 1 représente une vue de dessus en perspective d'une tablette munie d'une fiche façonnée en forme de crochet d'ancrage adaptable à l'alvéole de consignation d'une serrure de consigne à tiroir latéral d'insertion, la tablette étant retirée de la serrure.

La figure 2 représente une vue de dessous en perspective de la même tablette.

La figure 3 représente une vue de dessous en perspective d'une autre tablette munie d'une fiche façonnée en pièce de déconsignation adaptable à une serrure de consigne dont l'alvéole de déconsignation est située dans le prolongement de l'alvéole de consignation c'est-à-dire du côté du client utilisateur.

La figure 4 représente une vue en coupe longitudinale et axiale de la même tablette enclenchée sur la même serrure.

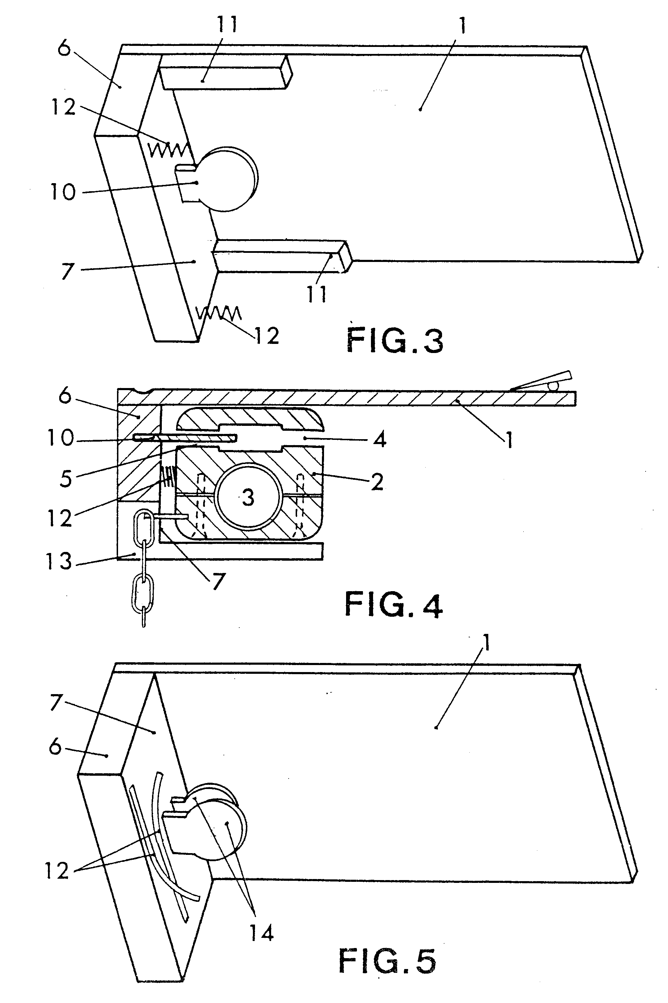

Enfin, la figure 5 représente une vue de dessous en perspective de la même tablette, munie de deux fiches de déconsignation superposées.

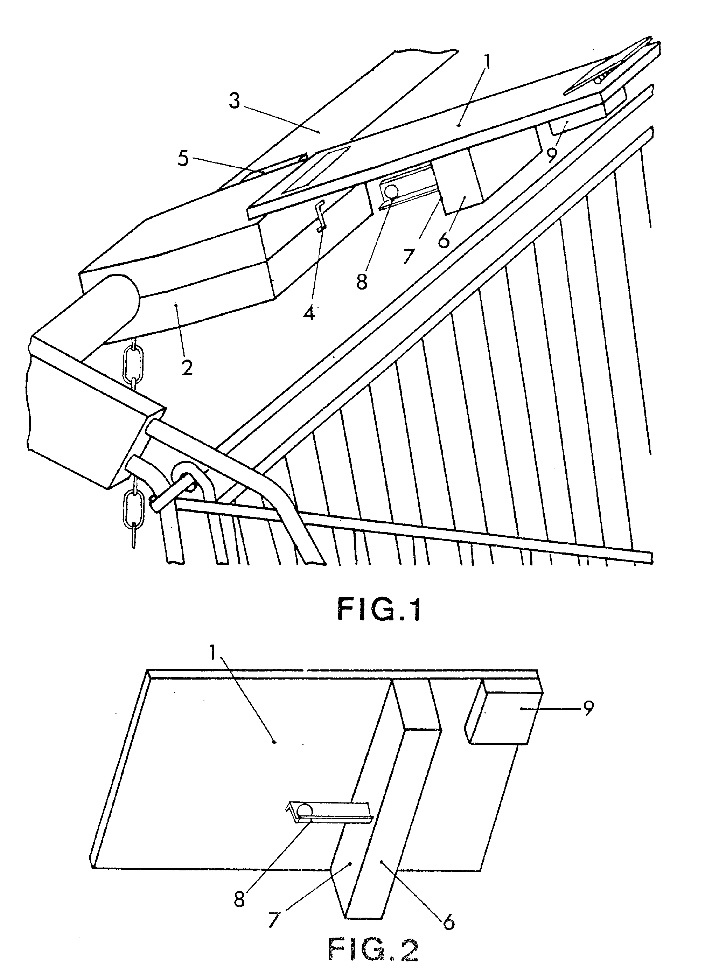

La figure 1 montre par une vue en perspective une tablette rectangulaire constituée par une plaque 1 découpée ou moulée dans un matériau rigide : métal, matière plastique dure ou bois, et dont les dimensions sont de 100 mm de largeur mesurée parallèlement à la poignée de manoeuvre d'un chariot, 200 mm de longueur ou hauteur, et de 6 mm d'épaisseur présentée devant l'entrée de consignation d'une serrure de consigne 2 de dimensions 120 x 120 x 40 mm fixée sur la poignée de manoeuvre 3 d'un chariot, inclinée en pupitre. Cette serrure de consigne est décrochée de celle du chariot précédent, c'est-à-dire que l'entrée de son alvéole de consignation 4 est ouverte et que son côté muni de cette alvéole forme une surface d'arrêt pour la tablette. L'entrée latérale de son alvéole de déconsignation 5 est munie d'un tiroir à fente d'insertion et est fermée par une pièce de monnaie.

Un taquet de butée 6 rigide, parallélépipédique, de 100 x 30 x 20 mm est fixé ou moulé sous la plaque 1 de façon que sa surface de butée 7 sur la serrure soit de préférence à une distance au moins égale à la longueur de la serrure de consigne 2 mesurée perpendiculairement à la poignée de manoeuvre 3 du chariot.

Une fiche rigide métallique ou en matière plastique dure façonnée en forme de crochet d'ancrage 8 est fixée perpendiculairement au centre de la surface de butée 7 du taquet de butée 6, parallèlement à la surface d'appui de la plaque 1 et à une distance telle de cette plaque que la fiche 8 puisse être introduite dans l'alvéole de consignation 4 de la serrure lorsque le client veut enclencher la tablette en mettant en contact la surface d'appui de la plaque avec celle de la serrure et en faisant glisser la tablette en la tirant vers lui.

La figure 2 montre dans le détail ce dispositif de fixation qui utilise le crochet d'ancrage 8 adapté aux caractéristiques de la serrure de consigne 2 utilisée comme support, en l'occurence une tige métallique d'une longueur de 40 mm présentant une section en S percée d'un trou d'ancrage à son extrêmité. La profondeur de pénétration de cette tige est limitée à la fois par son extrémité et par la surface de butée 7 du taquet de butée 6.

Pour utiliser ce dispositif de fixation, le client doit d'abord déconsigner son chariot par une pièce de déconsignation, puis enclencher sa tablette dans l'alvéole de consignation 4 de la serrure, et récupérer sa pièce qui est libérée par cette manoeuvre.

Après ses achats, le client récupère sa tablette en introduisant sa pièce de déconsignation dans l'alvéole correspondante 5 et il peut alors consigner son chariot par une manoeuvre déjà décrite précédemment.

L'expérience montre que la pièce de déconsignation indispensable au fonctionnement de la serrure est fréquemment oubliée par le client dans sa voiture ou chez lui et il s'en trouve démuni au moment de prendre en charge un chariot ce qui lui occasionne une perte de temps. Il s'avère donc utile de fixer contre la plaque 1 ou contre le taquet de butée 6 un étui soit en matériau rigide comme la tablette avec une fermeture à volet ou à glissière, soit en matériau souple, par exemple en textile, en cuir ou en matière plastique très souple avec fermeture à pression, à adhérence, à bouton ou à glissière, et d'un format intérieur suffisant pour y placer la pièce de déconsignation lorsque le chariot est remis en place après les achats : le client est ainsi assuré de pouvoir déconsigner un chariot au moment de sa prise en charge et de l'installation de sa tablette dont le risque d'oubli est moins grand en raison de son volume. L'étui est à supprimer si la fiche de la tablette est conçue en forme de pièce de déconsignation, comme dans le cas des figures 3, 4 et 5. Dans le cas des figures 1 et 2, un étui fermé 9 moulé en matière plastique rigide, de dimensions extérieures 30 x 30 x 8 mm est collé sous la plaque 1 de la tablette.

On remarque que l'inclinaison en pupitre d'une serrure peut dispenser de prévoir l'accrochage de la tablette par un crochet d'ancrage puisque la tablette pourrait être maintenue sur la serrure par gravité et son propre poids, à l'aide du taquet de butée 6 et d'une fiche rigide simplifiée de guidage introduite dans l'alvéole de consignation 4, et ne déclenchant pas le mécanisme.

Dans le mode de réalisation qui vient d'être décrit, une variante consiste donc à remplacer la fiche rigide 8 de section en S par une fiche rigide lisse, sans trou, ou sans crans dans d'autres cas, c'est-à-dire sans éléments d'ancrage, de dimensions correspondant à celles de l'alvéole de consignation 4. Ce dispositif évite les manoeuvres d'enclenchement et de déclenchement de la tablette par la pièce de déconsignation.

La figure 3 montre par une vue de dessous en perspective une autre tablette plus large et plus longue soit 220 x 110 x 6 mm munie d'une fiche rigide d'une longueur de 40 mm façonnée en pièce de déconsignation 10 qui peut être en métal ou en matière plastique dure et la figure 4 montre une coupe longitudinale et axiale de cette tablette enclenchée dans l'entrée de l'alvéole de déconsignation 5 de la serrure de consigne 2 d'un autre modèle, qui est fixée horizontalement sur la poignée de manoeuvre 3 du chariot, et qui n'est pas munie d'un tiroir d'insertion de la pièce. Cette serrure permet donc d'utiliser deux dispositifs de fixation d'une tablette : celui par fiche façonnée en forme de crochet d'ancrage 8 adapté aux caractéristiques de la serrure, et celui qui va être décrit.

Ce nouveau dispositif de fixation utilise le même principe que dans le cas des figures 1 et 2, c'est-à-dire que la fiche à enclencher dans la serrure est fixée contre la surface de butée 7 du taquet de butée 6 de façon à pouvoir être introduite dans l'alvéole de déconsignation 5 de la serrure de consigne 2. Ce dispositif permet de simplifier les manoeuvres puisque le client déconsigne directement son chariot en enclenchant sa tablette dans la serrure et qu'il la récupère en consignant le chariot : la pièce de déconsignation est devenue inutile. Pour assurer une bonne stabilité à cette tablette, et à d'autres modèles, les perfectionnements suivants sont apportés.

Un premier perfectionnement consiste à fixer longitudinalement deux rails de guidage 11 rigides sous la plaque 1, espacés de la largeur de la serrure utilisée, c'est-à-dire de 90 mm. Un deuxième perfectionnement consiste à fixer des ressorts de compression 12 contre la surface de butée 7 du taquet 6. En effet, lorsque le client veut libérer son chariot à l'aide d'une pièce de déconsignation, il doit enfoncer la pièce dans l'alvéole de déconsignation 5 et un ressort décroche le crochet d'ancrage en repoussant légèrement la pièce vers le client dans l'alvéole 5. Aussi, pour compenser ce jeu, il est nécessaire de fixer des ressorts de compression 12 qui peuvent être soit en hélice, comme dans le cas des figures 3 et 4, soit en lame de ressort comme dans le cas de la figure 5. La figure 3 montre ces ressorts dans leur position de détente, et la figure 4 montre ces ressorts dans leur forme comprimée. Un troisième perfectionnement, qui apparaît sur la figure 4, consiste à prolonger le taquet de butée 6 sur toute l'épaisseur de la serrure et sous la serrure de façon à former un talon enveloppant.

Selon la forme de réalisation préférentielle représentée par la figure 4, la tablette, qui est celle de la figure 3, est adaptable à une serrure de consigne de 65 mm d'épaisseur ou hauteur et de 90 mm de largeur. Le taquet de butée 6 est fixé au bord de la plaque 1 du côté du client. Il présente la même largeur que la plaque, la même hauteur que la serrure et se prolonge par un talon enveloppant 13 de 100 mm de longueur, le taquet et le talon étant munis d'une encoche suffisante et appropriée pour laisser passer la chaîne d'ancrage. Deux ressorts 12 sont fixés sous la fiche 10 afin de plaquer la tablette sur la serrure par un mouvement de levier.

Bien entendu, ces trois perfectionnements peuvent s'appliquer aussi à une tablette munie d'une fiche 8 façonnée en forme de crochet d'ancrage destinée à être enclenchée dans l'alvéole de consignation 4 d'une serrure en fonction de la conception du modèle de serrure utilisée.

Enfin, en raison du changent de diamètre des pièces de monnaie utilisables en France, un modèle de serrure est muni de deux entrées superposées d'alvéoles de déconsignation 5, pouvant recevoir chacune une pièce de monnaie de même valeur de diamètre différent. Pour décrocher un chariot, le client utilise l'une ou l'autre pièce, ou les deux à la fois. Aussi il est possible, à titre de perfectionnement, de fixer contre la surface de butée 7 du taquet 6, deux fiches de déconsignation façonnées en forme de pièce de monnaie en face de chaque entrée d'alvéole de déconsignation 5. La figure 5 montre une vue de dessous en perspective de cette tablette munie de deux fiches superposées 14 façonnées en pièce de monnaie de diamètre différent.

Le dernier dispositif, très simple, consiste à solidariser par soudage, moulage, collage, vissage, rivetage, ou par tous autres moyens compatibles avec la structure des serrures, la plaque 1 de la tablette sur la serrure 2 . Dans ce cas, la tablette ainsi constituée appartient au magasin et le dispositif mis en place ne gêne pas les manoeuvres de consignation ou de déconsignation du chariot par le client. Il faut évidemment fabriquer une plaque pouvant résister aux intempéries puisque les chariots sont souvent stockés sur le parc de stationnement non couvert des voitures des clients.

## Revendications

1. Tablette pour liste d'achats adaptable à la serrure de consigne de la poignée des chariots notamment de magasins à libre service, caractérisée en ce qu'elle est constituée d'une plaque (1) qui se fixe à une serrure de consigne de chariot par un assemblage temporaire à l'aide d'un dispositif à fiche (8 ou 10) dont est muni le dessous de la plaque (1) et pouvant s'enclencher dans les entrées (4 ou 5) d'une serrure (2) de consigne automatique installée sur la poignée de manoeuvre (3) des chariots à péage.

2. Tablette pour liste d'achats selon la revendication 1, caractérisée en ce qu'un taquet rigide de butée (6) est fixé sous la plaque (1) de la tablette, en ce qu'une fiche rigide (8 ou 10) est fixée contre la surface de butée (7) du taquet de butée (6) à la hauteur et dans le prolongement soit de l'entrée de l'alvéole de consignation (4), soit de l'entrée de l'alvéole de déconsignation (5) de la serrure (2) de consigne d'un chariot à péage et en ce que l'extrémité de la fiche rigide est façonnée soit en forme de crochet d'ancrage (8) correspondant au modèle de serrure (2) utilisé, soit en forme de pièce de déconsignation (10) formant l'élément d'ancrage.

3. Tablette pour liste d'achats selon la revendication 2, caractérisée en ce que la fiche rigide fixée contre la surface de butée (7) du taquet (6) est façonnée en forme de tige lisse démunie d'éléments d'ancrage et en ce que ses dimensions correspondent à celles de l'alvéole de consignation (4) de la serrure de consigne (2) utilisée.

4. Tablette pour liste d'achats selon la revendication 2, caractérisée en ce que le taquet de butée (6) est muni de deux fiches superposées (14) façonnées en forme de pièce de déconsignation (10) et en ce que ces fiches sont fixées contre la surface de butée (7) du taquet (6) à la hauteur et dans le prolongement des deux entrées superposées correspondantes de la serrure de consigne (2) utilisée.

5. Tablette pour liste d'achats selon la revendication 2, caractérisée en ce que le taquet de butée (6) est prolongé sous la serrure par un talon enveloppant (13) présentant une encoche de passage de la chaîne d'ancrage de la serrure (2) utilisée.

6. Tablette pour liste d'achats selon la revendication 1, caractérisée en ce que le dessous de sa plaque (1) est muni longitudinalement de deux rails de guidage (11) espacés de la largeur de la serrure (2) utilisée.

7. Tablette pour liste d'achats selon la revendication 2, caractérisée en ce que la surface de butée (7) du taquet (6) est munie de ressorts de compression (12).

8. Tablette pour liste d'achats selon la revendication 1, caractérisée en ce qu'un étui fermé (9) rigide ou souple de pièce de déconsignation est fixé contre la plaque (1) de la tablette ou contre le taquet de butée (6).

9. Tablette pour liste d'achats adaptable à la serrure de consigne de la poignée des chariots notamment de magasins à libre service, caractérisée en ce qu'elle est constituée d'une plaque (1) qui se fixe à une serrue (2) de consigne de chariot par un assemblage permanent à l'aide de moyens de liaison solidaires avec la plaque (1) et la serrure (2).

10. Tablette pour liste d'achats selon la revendication 9, caractérisée en ce que la plaque (1) est rendue solidaire de la serrure de consigne (2) d'un chariot par collage ou moulage ou vissage ou rivetage.

## Patentansprüche

1. Unterlage für eine Einkaufsliste zum Anbringen am Münzschloß des Schiebegriffes insbesondere von Einkaufswagen von Selbstbedienungsläden, dadurch gekennzeichnet, daß sie aus einer Platte (1) besteht, die vorübergehend mit einer an der Unterseite der Platte angebrachten Einsteckvorrichtung (8 oder 10) derart am Münzschloß des Schiebegriffes befestigt wird, daß sie in die dazu passende Öffnung (4 oder 5) des Münzschlosses (2) am Schiebegriff (3) gesteckt wird.

2. Unterlage für eine Einkaufsliste nach Patentanspruch 1, dadurch gekennzeichnet, daß unter der Platte (1) der Unterlage ein starrer Anschlag (6) angebracht ist, daß weiterhin eine starre Einsteckvorrichtung (8 oder 10) derart an der Anschlagfläche (7) des Anschlags (6) angebracht ist, daß sie sich entweder in der Verlängerung der Öffnung zum Verriegeln (4) oder in der Verlängerung der Öffnung für die Münze (5) des Münzschlosses (2) des Einkaufswagens befindet und daß das Ende der starren Einsteckvorrichtung entweder die Form eines zur Öffnung des Münzschlosses (2) passenden Verankerungshakens (8) oder die Form einer eine Verankerung bildenden Münze (10) hat.

3. Unterlage für eine Einkaufsliste nach Patentanspruch 2, dadurch gekennzeichnet, daß die an der Anschlagfläche (7) des Anschlags (6) angebrachte starre Einsteckvorrichtung die Form eines glatten Stiftes ohne Verankerung hat sowie dadurch, daß ihre Abmessungen in die Öffnung (4) Münzschlosses (2) paßt.

4. Unterlage für eine Einkaufsliste nach Patentanspruch 2, dadurch gekennzeichnet, daß der Anschlag (6) zwei übereinanderliegenden Einsteckvorrichtungen (14) besitzt, die die Form einer eine Verankerung bildenden Münze (10) haben, sowie dadurch, daß die Einsteckvorrichtungen (14) an der Anschlagfläche (7) des Anschlags (6) und in Höhe und Verlängerung der beiden entsprechenden Öffnungen des Münzschlosses (2) angebracht sind.

5. Unterlage für eine Einkaufsliste nach Patentanspruch 2, dadurch gekennzeichnet, daß der Anschlag (6) unter dem Münzschloß durch einen Ansatz (13) verlängert ist, der einen Einschnitt zum Durchführen der Verankerungskette des Münzschlosses (2) aufweist.

6. Unterlage für eine Einkaufsliste nach Patentanspruch 1, dadurch gekennzeichnet, daß die Unterseite der Platte (1) in Längsrichtung zwei Führungsschienen (11) besitzt, deren Abstand voneinander der Breite des Münzschlossens (2) entspricht.

7. Unterlage für eine Einkaufsliste nach Patentanspruch 2, dadurch gekennzeichnet, daß die Anschlagfläche (7) des Anschlags (6) mit einer Druckfeder (12) versehen ist.

8. Unterlage für eine Einkaufsliste nach Patentanspruch 1, dadurch gekennzeichnet, daß ein starrer oder flexibler geschlossener Münzbehälter (9) unter der Platte (1) und an der Anschlagfläche (7) anliegend angebracht ist.

9. Unterlage für eine Einkaufsliste zum Anbringen am Münzschloß des Schiebegriffes insbesondere von Einkaufswagen von Selbstbedienungsläden, dadurch gekennzeichnet, daß sie aus einer Platte (1) besteht, die anhand von dauerhaft mit der Platte (1) und dem Münzschloß (2) verbundene Mittel am Münzschloß (2) des Schiebegriffes eines Einkaufswagens befestigt wird.

10. Unterlage für eine Einkaufsliste nach Patentanspruch 9, dadurch gekennzeichnet, daß die Platte (1) durch Kleben, Anformen, Verschrauben oder nieten am Münzschloß (2) des Schiebegriffes eines Einkaufswagens befestigt wird.

## Claims

1. Purchasing list shelf able to be adapted to the deposit lock of the handle of trolleys of self-service shops, wherein it is formed of a plate (1) fixed to a trolley deposit lock by means of a temporary mounting with the aid of a card device (8 or 10) fitted below the plate (1) and able to interlocked in the entrances (4 or 5) of an automatic deposit lock (2) installed on the operating handle (3) of toll trolleys.

2. Purchasing list shelf according to claim 1, wherein a rigid stop catch (6) is fixed under the plate (1) of the shelf, wherein a rigid card (8 or 10) is fixed against the stop surface (7) of the stop catch (6) at the height and inside the elongation of either the entrance of the deposit cell (4) or of the entrance of the depositing cell of the deposit-returnable lock of a toll trolley and wherein the extremity of the rigid card is formed in the shape of either an anchorage hook (8) corresponding to the lock model used, or in the shape of a deposit-freeing piece (10) forming the anchorage element.

3. Purchasing list shelf according to claim 2, wherein the rigid card fixed against the stop surface (7) of the catch (6) is formed into a smooth rod without any anchorage elements and wherein its dimensions correspond to those of the deposit cell (4) of the deposit-returnable lock used (2).

4. Purchasing list shelf according to claim 2, wherein the stop catch (6) is provided with two superimposed cards (14) formed into the shape of a deposit-freeing piece (10) and wherein these cards are fixed against the stop surface (7) of the catch (6) at the height and inside the elongation of the corresponding two superimposed entrances of the deposit-returnable lock used (2).

5. Purchasing list shelf according to claim 2, wherein the stop catch (6) is extended under the lock by a covering talon (13) having a notch for passage of the anchorage chain of the lock (2) used.

6. Purchasing list shelf according to claim 1, wherein the bottom of its plate is longitudinally provided with two guiding rails (11) spaced from the width of the lock (2) used.

7. Purchasing list shelf according to claim 2, wherein the stop surface (7) of the catch (6) is fitted with compression springs (12).

8. Purchasing list shelf according to claim 1, wherein a rigid or flexible closed casing of the deposit-freeing piece is fixed against the plate (1) of the shelf or against the stop catch (6).

9. Purchasing list shelf able to be adapted to the deposit-returnable lock of the handle of trolleys of self-service shops, wherein it is formed of a plate (1) fixed to a trolley deposit-returnable lock by a permanent assembling with the aid of linking means integral with the plate (1) and the lock (2).

10. Purchasing list shelf according to claim 9, wherein the plate (1) is rendered integral with the deposit-returnable lock (2) of a trolley by means of glueing, moulding, screwing or rivetting.
